# FASCICULE DE BREVET EUROPEEN

(11) **EP 2 431 304 B1**
(45) Date de publication et mention de la délivrance du brevet: **27.11.2013**
(21) Numéro de dépôt: 11182059.3
(22) Date de dépôt: 20.09.2011
(51) Int. Cl.: B65G 13/11, B65G 39/12

(54) **Dispositif de convoyage à galets.**
Rollenfördervorrichtung.
Conveyor device with rollers.

(30) Priorité: 21.09.2010 FR 1057586
(43) Date de publication de la demande: 21.03.2012
(73) Titulaire: Courtin, Eric, 92200 Neuilly-sur-Seine (FR)
(72) Inventeur: Courtin, Eric, 92200 Neuilly-sur-Seine (FR)
(74) Mandataire: Derambure, Christian

(56) Documents cités:
- EP-A1- 2 123 578
- WO-A1-83/01607
- FR-A1- 2 386 459
- GB-A- 1 088 519
- GB-A- 1 254 725
- GB-A- 2 023 084
- JP-U- H0 582 918
- US-A- 2 593 089
- US-A- 2 990 929
- US-A1- 2002 043 442

## Description

L'invention concerne le convoyage à galets et elle a plus spécialement pour objet un dispositif de convoyage à galets.

On connaît déjà un dispositif de convoyage à galets qui a une direction de convoyage et un plan de symétrie vertical ― lorsqu'il est en état de pouvoir être utilisé ― et comprend une bande virtuelle de convoyage sur laquelle sont convoyés des objets à convoyer, laquelle bande virtuelle de convoyage est définie par deux ensembles latéraux de convoyage de structures analogues, portés par des moyens porteurs et disposés parallèlement à la direction de convoyage sur les deux côtés longitudinaux du dispositif de convoyage.

Dans la réalisation concernée, les objets à convoyer sont rigides et ont un encombrement transversal correspondant sensiblement à la largeur transversale de la bande virtuelle de convoyage et un encombrement longitudinal substantiel, typiquement du même ordre de grandeur que l'encombrement transversal. Il peut s'agir par exemple de bacs de contour rectangulaire ou carré, et de hauteur limitée par rapport à leur encombrement transversal ou longitudinal. De tels bacs sont structurellement indépendants du dispositif de convoyage et sont posés sur lui à son extrémité amont et récupérés à son extrémité aval pour un nouvel usage. Ils sont destinés au convoyage de pièces lesquelles sont d'abord déposées dans les bacs, puis convoyées grâce aux bacs et au dispositif de convoyage à galets, et enfin récupérées.

Dans une réalisation connue, un tel ensemble latéral de convoyage comprend, d'une part, un rail à galets latéral ayant un plan médian vertical et, d'autre part, un profilé de rive latéral ayant également un plan médian vertical confondu avec le précédent. Un tel rail à galets comprend un profilé support et une pluralité de galets successifs. Un profilé support a une section en U avec une âme inférieure, une aile érigée distale et une aile érigée proximale, ménageant un espace ouvert vers le haut. Une pluralité de galets successifs, dont les axes transversaux sont portés par les ailes du profilé support, ont un bord circulaire distal, un bord circulaire proximal et entre les deux bords circulaires une bande de roulement cylindrique. Les bandes de roulement saillent au-dessus des bords longitudinaux supérieurs des ailes du profilé support et la bande virtuelle de convoyage est la nappe, le plus souvent plane, qui tangente par-dessus les bandes de roulement. Un profilé de rive latéral comprend une partie d'association, associée rigidement au profilé support du rail à galets, et une partie de garde-fou qui est latérale et distale et saille au-dessus de la partie longitudinale supérieure distale de la partie d'association. Cette partie de garde-fou comporte une partie longitudinale active (de garde-fou) écartée vers le haut par rapport à la bande virtuelle de convoyage. Ainsi, selon leur disposition (anormale) sur le dispositif de convoyage, les objets convoyés interfèrent avec la partie de garde-fou laquelle est donc apte à empêcher que les objets ne chutent du dispositif de convoyage, provoquant également la chute des pièces lorsque les objets sont des bacs de réception de pièces, comme il a été précédemment exposé.

Un tel dispositif de convoyage à galets connu peut comporter également au moins un rail à galets médian porté par les moyens porteurs, situé entre les deux ensembles latéraux de convoyage, et disposé parallèlement à la direction de convoyage. En particulier un tel rail à galets médian peut avoir une structure analogue à un rail à galets latéral. Bien entendu, il n'est alors pas prévu d'associer à un tel rail à galets médian un profilé de rive, latéral par conception et par fonction.

Dans la réalisation considérée connue, les moyens porteurs peuvent comprendre au moins deux barres fixes porteuses, respectivement amont et aval, disposés transversalement, situées aux deux extrémités amont et aval, respectivement, du dispositif de convoyage, et au moins quatre pièces de liaison formant mâchoires, fixées chacune d'une part à l'extrémité d'un profilé support d'un rail à galets et d'autre part à l'une des barres porteuses.

Dans la réalisation considérée connue, la direction de convoyage peut être disposée inclinée d'amont en aval du haut vers le bas, le dispositif de convoyage fonctionnant par gravité.

Les dispositifs des réalisations connues ont pour inconvénient que les objets peuvent se mettre de travers sur le dispositif de convoyage et donc cesser d'être correctement alignés sur le dispositif de convoyage. Avec des objets ayant un encombrement transversal correspondant sensiblement à la largeur transversale de la bande virtuelle de convoyage et un encombrement longitudinal substantiel, ce défaut d'alignement est la cause de nombreux désordres et incidents, tels que le coincement ou l'arrêt de tel ou tel objet, avec des répercutions inévitables sur les objets placés en aval, la continuité du fonctionnement du dispositif de convoyage et son rendement.

D'autre part, le document GB 1085519, correspondant au préambule de la revendication 1, révèle un dispositif de convoyage avec deux ensembles latéraux de convoyage, chacun comprenant un rail à galets latéral, mais sans garde-fou latéral. Par rapport à ce document, le problème à la base de l'invention est de maintenir les objets convoyés suffisamment correctement alignés.

Le document GB 1254725 enseigne qu'un convoyeur à rouleaux comporte des guides latéraux. Mais, le convoyeur selon ce document ne comporte qu'un seul ensemble de convoyage et non deux ensembles latéraux de convoyage et un espace vide entre eux. D'autre part, le convoyeur selon ce document comporte en largeur un seul rouleau, très large, qui définit la bande de convoyage, et non deux galets, de largeur limitée. Enfin, le convoyeur selon ce document comporte deux parois de côté qui à la fois servent au support des rouleaux et au guidage et non deux rails à galets et deux profilés de rive.

L'invention vise à remédier aux inconvénients des dispositifs de convoyage du type général premièrement décrit et a donc pour but de pourvoir un dispositif de convoyage de ce type de moyens tels que les objets convoyés soient maintenus suffisamment correctement alignés sur le dispositif de convoyage et empêchés de se mettre de travers, ce qui permet un fonctionnement correct et sans incident du dispositif de convoyage.

A cet effet, l'invention a pour objet, selon un premier aspect, un dispositif de convoyage à galets ayant une direction de convoyage et un plan de symétrie et comprenant une bande virtuelle de convoyage pour des objets d'encombrement transversal correspondant sensiblement à la largeur transversale de la bande virtuelle de convoyage définie par deux ensembles latéraux de convoyage portés par des moyens porteurs et disposés parallèlement à la direction de convoyage sur les deux côtés longitudinaux du dispositif de convoyage, chaque ensemble latéral de convoyage comprenant :
- un rail à galets latéral ayant un plan médian et comprenant un profilé support de section en U avec une âme inférieure, une aile érigée distale et une aile érigée proximale, ménageant un espace ouvert, et une pluralité de galets successifs, dont les axes transversaux sont portés par les ailes du profilé support, ayant un bord circulaire distal, un bord circulaire proximal et entre eux une bande de roulement saillant des bords longitudinaux des ailes, la bande virtuelle de convoyage tangentant les bandes de roulement, et
- un profilé de rive latéral ayant un plan médian et comprenant une partie d'association, associée rigidement au profilé support du rail à galets ayant une section comprenant un pseudo-U formant la partie d'association et ayant une âme, une aile distale, une aile proximale et au moins une saillie, distale ou proximale, dirigée vers le plan médian et attenante au bord longitudinal de l'aile de la partie d'association, l'intrados de la partie d'association étant complémentaire de l'extrados du profilé support, la saillie de la partie d'association formant butée pour le bord longitudinal libre de l'aile du profilé support.

Ce dispositif de convoyage à galets est tel qu'un profilé de rive latéral comprend une partie de garde-fou latérale distale, saillant de la partie longitudinale distale de la partie d'association, ayant une partie longitudinale active écartée par rapport à la bande virtuelle de convoyage et ainsi apte à pouvoir interférer avec les objets convoyés afin d'empêcher qu'ils ne chutent du dispositif de convoyage, formée par un bord longitudinal dirigé vers le plan médian que comporte une traverse dirigée vers le plan médian d'un L renversé dont la hampe prolonge l'aile distale de la partie d'association et limite latéralement le dispositif de convoyage, le bord longitudinal étant situé dans le voisinage du droit du bord circulaire distal des galets, de sorte à être apte à empêcher que les objets convoyés se mettent de travers sur le dispositif de convoyage et donc de sorte à être apte à maintenir les objets convoyés correctement alignés sur le dispositif de convoyage, le profilé de rive latéral constituant pour les objets convoyés un profilé de guidage en ligne latéral.

Le bord longitudinal de la traverse dirigé vers le plan médian est situé à l'aplomb des bandes de roulement des galets, au voisinage des bords circulaires distaux. Selon une réalisation, le bord longitudinal est situé à l'aplomb des bandes de roulement des galets, à une distance des bords circulaires distaux inférieure à la moitié de la longueur axiale des galets et plus spécialement inférieure au quart de la longueur axiale des galets.

Selon une réalisation, le bord longitudinal de la au moins une saillie distale ou proximale du profilé de guidage dirigé vers le plan médian est situé au moins sensiblement à l'aplomb de l'intrados de l'aile érigée correspondante, distale ou proximale, du profilé support.

Selon une réalisation, la partie d'association du profilé de guidage en ligne latéral comporte une saillie distale et une saillie proximale.

Selon une réalisation, au moins une saillie distale ou proximale du profilé de guidage en ligne latéral comporte sur son bord longitudinal dirigé vers le plan médian, un retour dirigé vers le bas et l'âme inférieure, dont l'intrados coopère avec l'intrados de l'aile correspondante distale ou proximal du profilé support au voisinage de son bord longitudinal supérieur.

Selon une caractéristique, la bande virtuelle de convoyage est bornée sur ses deux côtés longitudinaux à l'aplomb des deux bords longitudinaux des deux traverses dirigés vers les plans médians des deux profilés de guidage en ligne latéraux.

Selon une réalisation, le dispositif de convoyage à galets comporte également au moins un rail à galets médian porté par les moyens porteurs, situé entre les deux ensembles latéraux de convoyage et disposé parallèlement à la direction de convoyage. En particulier un tel rail à galets médian peut avoir une structure analogue à un rail à galets latéral.

Selon une réalisation, les moyens porteurs comprennent au moins deux barres fixes porteuses, respectivement amont et aval, disposés transversalement, situées aux deux extrémités amont et aval, respectivement, du dispositif de convoyage, et au moins quatre pièces de liaison formant mâchoires, fixées chacune d'une part à l'extrémité d'un profilé support d'un rail à galets et d'autre part à l'une des barres porteuses.

Selon une caractéristique, la direction de convoyage est disposée inclinée d'amont en aval du haut vers le bas, le dispositif de convoyage fonctionnant par gravité.

Selon un second aspect, un profilé de guidage en ligne latéral spécialement destiné à un dispositif de convoyage tel qu'il vient d'être décrit, a un plan médian vertical et comprend :
■ une partie d'association, apte à être associée rigidement au profilé support du rail à galets latéral, de section en pseudo-U, ayant une âme inférieure, une aile érigée distale, une aile érigée proximale et au moins une saillie, distale ou proximale, dirigée vers le plan médian et attenante au bord longitudinal supérieur de l'aile correspondante de la partie d'association,
■ et une partie de section en L renversé dont la hampe prolonge vers le haut l'aile distale de la partie d'association et est apte à limiter latéralement le dispositif de convoyage, et dont la traverse est dirigée vers le plan médian et comporte un bord longitudinal dirigé vers le plan médian apte à être écarté vers le haut par rapport à la bande virtuelle de convoyage et ainsi apte à pouvoir interférer avec les objets convoyés par le dispositif de convoyage afin d'empêcher qu'ils ne chutent du dispositif de convoyage, le bord longitudinal de la traverse dirigé vers le plan médian étant en outre apte à être situé dans le voisinage de l'aplomb du bord circulaire distal des galets, de sorte à être apte à empêcher que les objets convoyés se mettent de travers sur le dispositif de convoyage et donc de sorte à être apte à maintenir les objets convoyés suffisamment correctement alignés sur le dispositif de convoyage.

On décrit maintenant plusieurs modes de réalisation de l'invention à l'aide des dessins, dans lesquels :
- La figure 1 est une vue en perspective d'une partie d'extrémité d'un dispositif de convoyage à galets sur lequel se trouve un objet, en l'espèce un bac lequel est en ligne sur le dispositif de convoyage, et non de travers, le dispositif de convoyage ici représenté étant dépourvu de rail à galets médian et les deux rails à galets latéraux et les deux profilés de rive formant des profilés de guidage en ligne latéral identiques et disposés de façon symétrique par rapport au plan de symétrie du dispositif de convoyage.

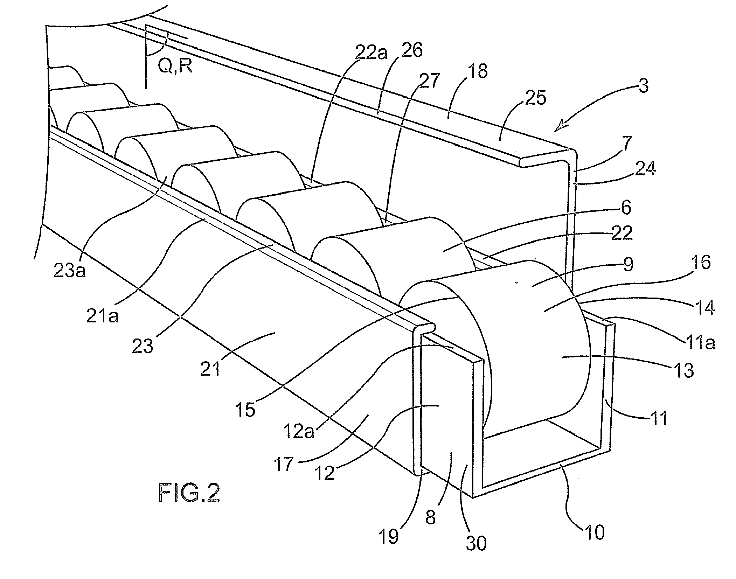

- La figure 2 est une vue en perspective d'une partie d'extrémité d'un rail à galets et d'un profilé de guidage en ligne latéral, dans lequel est placé le rail à galets, la disposition étant celle existant dans le dispositif de convoyage lorsqu'il est en état de pouvoir être utilisé.

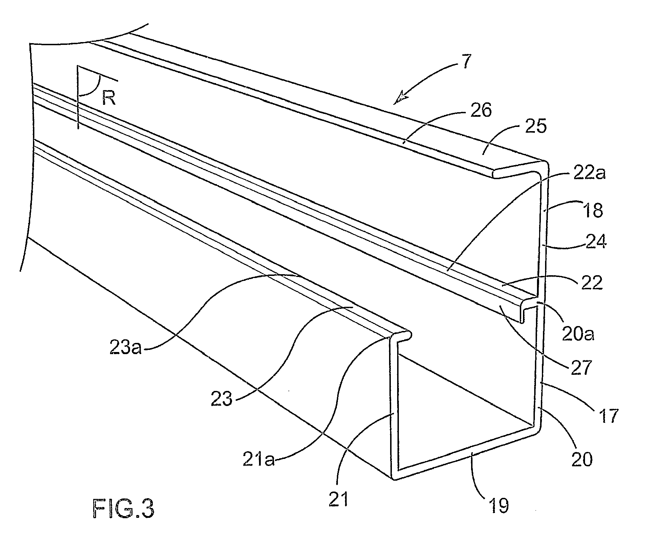

- La figure 3 est une vue en perspective analogue à celle de la figure 2, du seul profilé de guidage en ligne latéral.

Un dispositif de convoyage à galets 1 pour des objets B, présente un plan de symétrie P qui, lorsque le dispositif de convoyage 1 est à l'état - et notamment en position - de pouvoir être utilisé (c'est-à-dire convoyer des objets B), est vertical ou sensiblement vertical. Le dispositif de convoyage 1 a par ailleurs une direction de convoyage D, le long de laquelle il s'étend et un sens de convoyage F.

La description est faite en référence à l'état de possible utilisation dont il vient d'être question. Mais, bien entendu, l'invention vise le dispositif de convoyage 1 quel que soit l'état - et notamment la position - dans lequel il se trouve. En outre, l'invention vise le dispositif de convoyage 1 aussi bien monté que démonté en tout ou en partie. Enfin, l'invention vise les moyens constitutifs permettant la réalisation et la mise en oeuvre du dispositif de convoyage 1 et se rapportant à un élément essentiel de celui-ci, à savoir tout spécialement un profilé de guidage en ligne latéral spécialement destiné au dispositif de convoyage 1 et sur lequel on reviendra par la suite.

C'est en relation avec cet état - et notamment position - de possible utilisation, que doivent être compris les termes « haut », « bas », « supérieur », « inférieur », « au-dessus », la portée de ces termes n'étant donc que relative.

C'est en relation avec la direction de convoyage D que doivent être compris les termes « longitudinal » et « transversal », lesquels se réfèrent, respectivement, à une direction parallèle à la direction D et à une direction orthogonale à la direction D.

C'est en relation avec le plan de symétrie P que doivent être compris les termes « proximal » et « distal », lesquels désignent respectivement ce qui est le plus éloigné du plan de symétrie P et ce qui est le plus proche de lui, la portée de ces termes n'étant donc que relative.

Enfin, c'est en relation avec le sens de convoyage F que doivent être compris les termes « amont » et « aval ».

Le dispositif de convoyage 1 forme une bande virtuelle de convoyage 2 sur laquelle sont convoyés des objets à convoyer. Dans la réalisation représentée, la bande virtuelle de convoyage 2 est plane et sa trace sur un plan vertical transversal est horizontale.

Comme indiqué, l'invention est tout spécialement adaptée au cas d'objets B à convoyer ayant un encombrement transversal correspondant sensiblement à la largeur transversale de la bande virtuelle de convoyage 2 et un encombrement longitudinal (dans la direction de convoyage D substantiel, typiquement du même ordre de grandeur que l'encombrement transversal.

Les objets B peuvent être, dans une réalisation typique, des bacs de contour rectangulaire ou carré, et de hauteur limitée par rapport à leur encombrement transversal ou longitudinal. De tels bacs B sont structurellement indépendants du dispositif de convoyage 1. Ils sont posés sur lui à son extrémité amont et récupérés à son extrémité aval pour un nouvel usage. Ils sont destinés au convoyage de pièces qui sont d'abord déposées dans les bacs B, puis convoyées grâce aux bacs B et au dispositif de convoyage à galets 1, et enfin récupérées.

La bande virtuelle de convoyage 2 est définie par deux ensembles latéraux de convoyage 3, globalement rigides.

Les deux ensembles latéraux de convoyage 3 ont des structures analogues et ils sont portés par des moyens porteurs 4, formant bâti.

Les deux ensembles latéraux de convoyage 3 sont disposés longitudinalement, parallèlement à la direction de convoyage D sur les deux côtés longitudinaux du dispositif de convoyage 1 et, notamment, les deux ensembles latéraux de convoyage 3 sont espacés transversalement l'un de l'autre, un espace médian 5 vide existant entre eux.

Dans une réalisation, la direction de convoyage D est disposée inclinée d'amont en aval du haut vers le bas, le dispositif de convoyage 1 fonctionnant par gravité. Les deux ensembles latéraux de convoyage 3 sont donc alors eux-aussi inclinés, de la même manière.

Les deux ensembles latéraux de convoyage 3 ayant des structures analogues, un seul ensemble latéral de convoyage 3 est décrit. L'autre ensemble latéral de convoyage 3 est analogue et symétrique du précédent par rapport au plan de symétrie P.

Chaque ensemble latéral de convoyage 3 comprend un rail à galets latéral 6 et un profilé de guidage en ligne latéral 7.

Il est entendu que pour un ensemble latéral de convoyage 3 donné, le rail à galets latéral 6 et le profilé de guidage en ligne latéral 7 peuvent être d'un seul tenant de l'extrémité amont à l'extrémité aval ou être formés de plusieurs tronçons successifs assemblés entre eux directement ou indirectement étant portés par des moyens porteurs intermédiaires.

Le cas échéant, le dispositif de convoyage à galets 1 comporte également un ou plusieurs rails à galets médians, également portés par les moyens porteurs 4, situés entre les deux ensembles latéraux de convoyage 3, dans l'espace médian 5, et disposés parallèlement à la direction de convoyage D. De tels rails à galets médians ont une structure analogue à un rail à galets latéral 6.

On décrit maintenant plus spécialement un rail à galets latéral 6, lequel a un plan médian vertical Q.

Un tel rail à galets latéral 6 comprend un profilé support 8 une pluralité de galets 9 successifs.

Le profilé support 8 a une section droite transversale en U. Il comporte une âme inférieure 10, une aile érigée distale 11 et une aile érigée proximale 12, ménageant entre elles dans leur intrados un espace 13 ouvert vers le haut.

Les galets 9 ont leurs axes disposés transversalement et portés par les ailes 11 et 12 du profilé support 8.

Un galet 9 comporte un bord circulaire distal 14, un bord circulaire proximal 15 et une bande de roulement 16. La bande de roulement 16 saille au-dessus des bords longitudinaux supérieurs 11a et 12a des ailes 10 et 11 du profilé support 8.

La bande virtuelle de convoyage 2 est la bande qui tangente par-dessus les bandes de roulement 16.

On décrit maintenant plus spécialement un profilé de guidage en ligne latéral 7, lequel a un plan médian vertical R qui, lorsque le profilé de guidage en ligne latéral 7 et le profilé support 8 sont assemblés, est confondu avec le plan médian vertical Q.

Un tel profilé de guidage en ligne latéral 7 comprend une partie d'association 17 et une partie de section en L renversé 18.

La partie d'association 17 est apte à être associée rigidement au profilé support 8 du rail à galets latéral 6 et dans le dispositif de convoyage 1 assemblé et à l'état de possible utilisation, elle réalise cette fonction.

La partie d'association 17 a une section droite transversale en pseudo-U. Elle comporte une âme inférieure 19, une aile érigée distale 20, une aile érigée proximale 21 et, dans la réalisation représentée, une saillie distale 22 et une saillie proximale 23. Ces deux saillies 22 et 23 sont dirigées vers le plan médian R. Elles sont attenantes aux bords longitudinaux supérieurs virtuels 20a et 21a des ailes correspondantes 20 et 21 de la partie d'association 17.

L'intrados de la partie d'association 17 est complémentaire de l'extrados du profilé support 8 du rail à galets latéral 6, les dimensions des sections respectives de la partie d'association 17 et du profilé support 8 étant adaptées en conséquence. En outre, les saillies 22 et 23 de la partie d'association 17 sont aptes à former une butée pour les bords longitudinaux libres supérieurs des ailes 10 et 11 du profilé support 8.

Dans une variante de réalisation non représentée, il est prévu une seule saillie 22 ou 23.

La partie de section en L renversé 18 a une section droite transversale en L renversé. En référence au caractère typographique qu'est un L, on peut définir s'agissant de la partie de section en L renversé 18, une hampe 24 et une traverse 25.

La hampe 24 prolonge vers le haut l'aile distale 20 de la partie d'association, à partir de son bord longitudinal supérieur virtuel 20a.

Ainsi, la hampe 24 est apte à limiter latéralement le dispositif de convoyage 1 et dans le dispositif de convoyage 1 assemblé et à l'état de possible utilisation, elle réalise cette fonction.

La traverse 25 est dirigée vers le plan médian R et elle comporte un bord longitudinal 26, dirigé vers le plan médian R.

Ce bord longitudinal 26 est apte à être écarté vers le haut par rapport à la bande virtuelle de convoyage 2 et dans le dispositif de convoyage 1 assemblé et à l'état de possible utilisation, elle est dans cette situation. Il est écarté vers le haut d'une distance inférieure à la hauteur des objets B de sorte à être ainsi apte à pouvoir interférer avec les objets B convoyés par le dispositif de convoyage 1 et, de fait, dans le dispositif de convoyage 1 assemblé et à l'état de possible utilisation, e bord longitudinal 26 est dans cette situation et réalise cette première fonction.

Ce bord longitudinal 26 est apte par ailleurs à être situé dans le voisinage de l'aplomb du bord circulaire distal 14 des galets 9 et, de fait, dans le dispositif de convoyage 1 assemblé et à l'état de possible utilisation, le bord longitudinal 26 est dans cette situation et réalise une seconde fonction.

Le bord longitudinal 26 remplit une première fonction qui est d'empêcher que les objets B convoyés par le dispositif de convoyage 1 ne chutent du dispositif de convoyage 1.

Le bord longitudinal 26 remplit une seconde fonction qui s'ajoute à la première fonction et qui est d'empêcher que les objets B convoyés se mettent de travers sur le dispositif de convoyage 1. Autrement exprimée, la seconde fonction est de maintenir les objets B convoyés suffisamment correctement alignés sur le dispositif de convoyage 1.

C'est pour cela que le profilé 7 qui est un profilé de rive latéral constitue aussi pour les objets B convoyés un profilé de guidage en ligne latéral.

Le bord longitudinal 26 de la traverse 25 est situé à l'aplomb des bandes de roulement 16 des galets 9, au voisinage des bords circulaires distaux 14. Dans une réalisation plus particulière, le bord longitudinal 26 est situé non seulement à l'aplomb des bandes de roulement des galets mais également à une distance des bords circulaires distaux 14 qui est inférieure à la moitié de la longueur axiale des galets 9 (longueur entre les bords circulaires distal 14 et proximal 15). Dans une réalisation plus particulière, le bord longitudinal 26 est situé à une distance des bords circulaires distaux 14 qui et inférieure au quart de la longueur axiale des galets 9.

Dans la réalisation représentée, les bords longitudinaux 22a et 23a des saillies distale 22 et proximale 23 du profilé de guidage en ligne latéral 7, dirigés vers le plan médian R sont situés au moins sensiblement à l'aplomb de l'intrados de l'aile érigée correspondante, distale et proximale, 11 et 12 du profilé support 8.

Dans la réalisation représentée, il est prévu que la saillie distale 22 du profilé de guidage en ligne latéral 7 comporte sur son bord longitudinal 22a dirigé vers le plan médian R, un retour 27 dirigé vers le bas et l'âme inférieure 19. L'intrados du retour 27 coopère avec l'intrados de l'aile distale 11 du profilé support 8 au voisinage de son bord longitudinal supérieur 12a.

Bien entendu, il peut être prévu deux retours pour les deux saillies 22 et 23 ou un seul retour pour la saillie proximale 23.

Ainsi que cela résulte de la description qui précède, la bande virtuelle de convoyage 2 est bornée sur ses deux côtés longitudinaux à l'aplomb des deux bords longitudinaux 26 des deux traverses 25 des deux profilés de guidage en ligne latéraux 7, des deux ensembles latéraux 3.

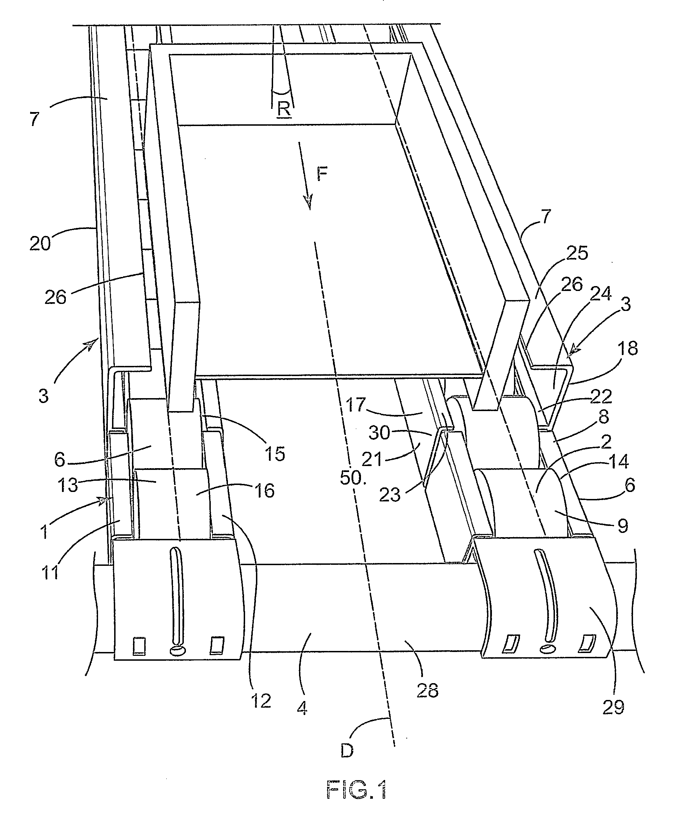

Selon une réalisation possible, les moyens porteurs 4 comprennent en premier lieu deux barres fixes porteuses 28, respectivement amont et aval, dont une seule est représentée sur la figure 1. Ces barres 28 sont disposées transversalement. Elles sont situées aux deux extrémités amont et aval, respectivement, du dispositif de convoyage 1. Le cas échéant, il est prévu une ou plusieurs barres fixes porteuses intermédiaires. Les moyens porteurs 4 comprennent en second lieu quatre pièces de liaison formant mâchoires 29, fixées chacune d'une part à l'extrémité 30 d'un profilé support 8 d'un rail à galets 6 et d'autre part à l'une des barres porteuses 28. Sur la figure 1, seules deux pièces de liaison formant mâchoires 29 sont représentées.

Dans la réalisation représentée, le bord longitudinal 26 est à section de contact avec les objets B arrondie, et le cas échéant rendu glissant, de manière que la surface de frottement du bord 26 sur les objets soit minimale et ne freine pas le déplacement des objets B.

## Revendications

1. Dispositif de convoyage à galets (1) ayant une direction de convoyage (D) et un plan de symétrie (P) et comprenant une bande virtuelle de convoyage (2) pour des objets (B) d'encombrement transversal correspondant sensiblement à la largeur transversale de la bande virtuelle de convoyage (2) définie par deux ensembles latéraux de convoyage (3) portés par des moyens porteurs (4), espacés transversalement l'un de l'autre par un espace médian (5) vide, et disposés parallèlement à la direction de convoyage (D) sur les deux côtés longitudinaux du dispositif de convoyage (1), chaque ensemble latéral de convoyage (3) comprenant :
- un rail à galets latéral (6) ayant un plan médian (Q) et comprenant un profilé support (8) de section en U avec une âme (10), une aile érigée distale (11) et une aile érigée proximale (12), ménageant un espace (13) ouvert, et une pluralité de galets (9) successifs, dont les axes transversaux sont portés par les ailes (11 et 12) du profilé support (8), ayant un bord circulaire distal (14), un bord circulaire proximal (15) et entre eux une bande de roulement (16) saillant des bords longitudinaux (11 a et 12a) des ailes (11 et 12), la bande virtuelle de convoyage (2) tangentant les bandes de roulement (16), et
- un profilé de rive latéral (7) ayant un plan médian et comprenant une partie d'association (17), associée rigidement au profilé support (8) du rail à galets (6) ayant une section comprenant un pseudo-U formant la partie d'association (17) et ayant une âme (19), une aile distale (20), une aile proximale (21) et au moins une saillie, distale (22) ou proximale (23), dirigée vers le plan médian (R) et attenante au bord longitudinal de l'aile (20, 21) de la partie d'association (17), l'intrados de la partie d'association (17) étant complémentaire de l'extrados du profilé support (8), la saillie (22, 23) de la partie d'association (17) formant butée pour le bord longitudinal libre (11a, 12a) de l'aile (11, 12) du profilé support (8), **caractérisé par** un profilé de rive latéral (7) qui comprend une partie de garde-fou latérale distale, saillant de la partie longitudinale distale de la partie d'association (17), ayant une partie longitudinale active écartée par rapport à la bande virtuelle de convoyage (2) et ainsi apte à pouvoir interférer avec les objets (B) convoyés afin d'empêcher qu'ils ne chutent du dispositif de convoyage (1), formée par un bord longitudinal (26) dirigé vers le plan médian (R) que comporte une traverse (25) dirigée vers le plan médian (R) d'un L renversé dont la hampe (24) prolonge l'aile distale (20) de la partie d'association (17) et limite latéralement le dispositif de convoyage (1), le bord longitudinal (26) étant situé dans le voisinage du droit du bord circulaire distal (14) des galets (9) et à l'aplomb des bandes de roulement (16) des galets (9), de sorte à être apte à empêcher que les objets (B)
convoyés se mettent de travers sur le dispositif de convoyage (1) et donc de sorte à être apte à maintenir les objets (B) convoyés correctement alignés sur le dispositif de convoyage (1), le profilé de rive latéral (7) constituant pour les objets (B) convoyés un profilé de guidage en ligne latéral (7).

2. Dispositif de convoyage à galets (1) selon la revendication 1, **caractérisé en ce que** le bord longitudinal (26) de la traverse (25) dirigé vers le plan médian (R) est situé au droit des bandes de roulement (16) des galets (9), à une distance des bords circulaires distaux (14) inférieure à la moitié de la longueur axiale des galets (9) et plus spécialement inférieure au quart de la longueur axiale des galets (9).

3. Dispositif de convoyage à galets (1) selon l'une quelconque des revendications 1 à 2, **caractérisé en ce que** le bord longitudinal (22a, 23a) de la saillie distale (22) ou proximale (23) du profilé de guidage en ligne latéral (7) dirigé vers le plan médian est situé au moins sensiblement au droit de l'intrados de l'aile érigée correspondante, distale ou proximale, du profilé support (8).

4. Dispositif de convoyage à galets (1) selon l'une quelconque des revendications 1 à 3, **caractérisé en ce que** la partie d'association (17) du profilé de guidage en ligne latéral (7) comporte une saillie distale (22) et une saillie proximale (23).

5. Dispositif de convoyage à galets (1) selon l'une quelconque des revendications 1 à 4, **caractérisé en ce qu'**au moins une saillie distale (22) ou proximale (23) du profilé de guidage en ligne latéral (7) comporte sur son bord longitudinal dirigé vers le plan médian, un retour (27) dirigé vers l'âme inférieure (19), dont l'intrados coopère avec l'intrados de l'aile correspondante distale (11) ou proximale (12) du profilé support (8) au voisinage de son bord longitudinal (11a ou 12a).

6. Dispositif de convoyage à galets (1) selon l'une quelconque des revendications 1 à 5, **caractérisé en ce que** la bande virtuelle de convoyage (2) est bornée sur ses deux côtés longitudinaux au droit des deux bords longitudinaux (26) des deux traverses (25) dirigés vers les plans médians (R) des deux profilés de guidage en ligne latéraux (7).

7. Dispositif de convoyage à galets (1) selon l'une quelconque des revendications 1 à 6, **caractérisé en ce qu'**il comporte également au moins un rail à galets médian porté par les moyens porteurs (4), situé entre les deux ensembles latéraux de convoyage (3) et disposé parallèlement à la direction de convoyage (D).

8. Dispositif de convoyage à galets (1) selon la revendication 7, **caractérisé en ce qu'**un rail à galets médian a une structure analogue à un rail à galets latéral (6).

9. Dispositif de convoyage à galets (1) selon l'une quelconque des revendications 1 à 8, **caractérisé en ce que** les moyens porteurs (4) comprennent au moins deux barres fixes porteuses (28), respectivement amont et aval, disposés transversalement, situées aux deux extrémités amont et aval, respectivement, du dispositif de convoyage (1), et au moins quatre pièces de liaison formant mâchoires (29), fixées chacune d'une part à l'extrémité (30) d'un profilé support (8) d'un rail à galets (6) et d'autre part à l'une des barres porteuses (28).

10. Dispositif de convoyage à galets (1) selon l'une quelconque des revendications 1 à 9, **caractérisé en ce que** la direction de convoyage (D) est disposée inclinée d'amont en aval du haut vers le bas, le dispositif de convoyage (1) fonctionnant par gravité.

## Patentansprüche

1. Fördervorrichtung mit Rollen (1), die eine Förderrichtung (D) und eine Symmetrieebene (P) aufweist und ein virtuelles Förderband (2) für Gegenstände (B) mit einem Raumbedarf in Querrichtung umfasst, der im Wesentlichen der Breite in Querrichtung des virtuellen Förderbands (2) entspricht, das durch zwei seitliche Förderanordnungen (3) definiert wird, die von Trägermitteln (4) getragen werden, die in Querrichtung durch einen leeren mittleren Raum (5) voneinander beabstandet sind und parallel zu der Förderrichtung (D) auf den zwei Längsseiten der Fördervorrichtung (1) angeordnet sind, wobei jede seitliche Förderanordnung (3) Folgendes umfasst:
- eine seitliche Rollenschiene (6), die eine Mittelebene (Q) aufweist und ein Trägerprofil (8) mit U-förmigem Querschnitt mit einem Kern (10), einem distalen aufgerichteten Schenkel (11) und einem proximalen aufgerichteten Schenkel (12), die einen offenen Raum (13) bilden, und eine Vielzahl von aufeinanderfolgenden Rollen (9) umfasst, die von den Schenkeln (11 und 12) des Trägerprofils (8) getragen werden, mit einem distalen kreisförmigen Rand (14), einem proximalen kreisförmigen Rand (15) und zwischen ihnen einer Lauffläche (16), die über die Längsränder (11a und 12a) der Schenkel (11 und 12) übersteht, wobei das virtuelle Förderband (2) die Laufflächen (16) tangiert, und
- ein seitliches Randprofil (7), das eine Mittelebene aufweist und einen Verbindungsteil (17) umfasst, der starr mit dem Trägerprofil (8) der Rollenschiene (6) verbunden ist, mit einem Querschnitt, der ein Pseudo-U umfasst, das den Verbindungsteil (17) bildet und einen Kern (19), einen distalen Schenkel (20), einen proximalen Schenkel (21) und mindestens einen, distalen (22) oder proximalen (23), Vorsprung aufweist, der zu der Mittelebene (R) hin gerichtet ist und an den Längsrand des Schenkels (20, 21) des Verbindungsteils (17) angrenzt, wobei die Innenseite des Verbindungsteils (17) zu der Außenseite des Trägerprofils (8) komplementär ist, wobei der Vorsprung (22, 23) des Verbindungsteils (17) einen Anschlag für den freien Längsrand (11 a, 12a) des Schenkels (11, 12) des Trägerprofils (8) bildet,
**gekennzeichnet durch** ein seitliches Randprofil (7), das einen distalen seitlichen Geländerteil umfasst, der über den distalen Längsteil des Verbindungsteils (17) übersteht, mit einem aktiven Längsteil, der relativ zu dem virtuellen Förderband (2) beabstandet ist und somit mit den geförderten Gegenständen (B) interferieren kann, um zu verhindern, dass sie von der Fördervorrichtung (1) herabfallen, der **durch** einen Längsrand (26) gebildet ist, der zu der Mittelebene (R) hin gerichtet ist, die eine Querleiste (25) aufweist, die zu der Mittelebene (R) eines umgekehrten L hin gerichtet ist, dessen senkrechter Hauptstrich (24) den distalen Schenkel (20) des Verbindungsteils (17) fortsetzt und die Fördervorrichtung (1) seitlich begrenzt, wobei der Längsrand (26) in der Nähe der Senkrechten des distalen kreisförmigen Rands (14) der Rollen (9) und lotrecht zu den Laufflächen (16) der Rollen (9) angeordnet ist, derart, dass er verhindern kann, dass die geförderten Gegenstände (B) sich quer auf die Fördervorrichtung (1) legen, und somit derart, dass die geförderten Gegenstände (B) korrekt ausgerichtet auf der Förderrichtung (1) gefördert werden, wobei das seitliche Randprofil (7) für die geförderten Gegenstände (B) ein seitliches Profil für die gerade Führung (7) bildet.

2. Fördervorrichtung mit Rollen (1) nach Anspruch 1, **dadurch gekennzeichnet, dass** der Längsrand (26) der Querleiste (25), der zu der Mittelebene (R) hin gerichtet ist, rechtwinklig zu den Laufflächen (16) der Rollen (9) angeordnet ist, in einem Abstand zu den distalen kreisförmigen Rändern (14), der kleiner als die Hälfte der axialen Länge der Rollen (9) ist und insbesondere kleiner als ein Viertel der axialen Länge der Rollen (9) ist.

3. Fördervorrichtung mit Rollen (1) nach einem der Ansprüche 1 bis 2, **dadurch gekennzeichnet, dass** der Längsrand (22a, 23a) des, distalen (22) oder proximalen (23), Vorsprungs des seitlichen Profils für die gerade Führung (7), der zu der Mittelebene hin gerichtet ist, im Wesentlichen rechtwinklig zu der Innenseite des entsprechenden aufgerichteten, distalen oder proximalen, Schenkels des Trägerprofils (8) angeordnet ist.

4. Fördervorrichtung mit Rollen (1) nach einem der Ansprüche 1 bis 3, **dadurch gekennzeichnet, dass** der Verbindungsteil (17) des seitlichen Profils für die gerade Führung (7) einen distalen Vorsprung (22) und einen proximalen Vorsprung (23) aufweist.

5. Fördervorrichtung mit Rollen (1) nach einem der Ansprüche 1 bis 4, **dadurch gekennzeichnet, dass** mindestens ein distaler (22) oder proximaler (23) Vorsprung des seitlichen Profils für die gerade Führung (7) an seinem zu der Mittelebene hin gerichteten Längsrand einen Rücksprung (27) aufweist, der zu dem inneren Kern (19) hin gerichtet ist, dessen Innenseite mit der Innenseite des entsprechenden distalen (11) oder proximalen (12) Schenkel des Trägerprofils (8) in der Nähe seines Längsrands (11a oder 12a) zusammenwirkt.

6. Fördervorrichtung mit Rollen (1) nach einem der Ansprüche 1 bis 5, **dadurch gekennzeichnet, dass** das virtuelle Förderband (2) an seinen zwei Längsseiten rechtwinklig zu den zwei Längsrändern (26) der zwei Querleisten (25), die zu den Mittelebenen (R) hin gerichtet sind, von den zwei seitlichen Profilen für die gerade Führung (7) begrenzt ist.

7. Fördervorrichtung mit Rollen (1) nach einem der Ansprüche 1 bis 6, **dadurch gekennzeichnet, dass** sie auch mindestens eine mittlere Rollenschiene aufweist, die von den zwei Trägermitteln (4) getragen wird, zwischen den zwei seitlichen Förderanordnungen (3) befindlich ist und parallel zu der Förderrichtung (D) angeordnet ist.

8. Fördervorrichtung mit Rollen (1) nach Anspruch 7, **dadurch gekennzeichnet, dass** eine mittlere Rollenschiene eine Struktur aufweist, die zu einer seitlichen Rollenschiene (6) analog ist.

9. Fördervorrichtung mit Rollen (1) nach einem der Ansprüche 1 bis 8, **dadurch gekennzeichnet, dass** die Trägermittel (4) mindestens zwei ortsfeste Trägerbalken (28), einen vorderen bzw. einen hinteren, umfassen, die in Querrichtung angeordnet sind, die sich an den zwei Enden, dem vorderen bzw. dem hinteren, der Fördervorrichtung (1) befinden, und mindestens vier Backen (29) bildende Verbindungsteile umfassen, die jeweils einerseits an dem Ende (30) eines Trägerprofils (8) einer Rollenschiene (6) und andererseits an einem der Trägerbalken (28) befestigt sind.

10. Fördervorrichtung mit Rollen (1) nach einem der Ansprüche 1 bis 9, **dadurch gekennzeichnet, dass** die Förderrichtung (D) von vorne nach hinten von oben nach unten geneigt angeordnet ist, wobei die Fördervorrichtung (1) schwerkraftbedingt funktioniert.

## Claims

1. Roller conveyance device (1) having a direction of conveyance (D) and a plane of symmetry (P) and comprising a virtual conveyor belt (2) for objects (B) of transverse dimensions substantially corresponding to the transverse width of the virtual conveyor belt (2) defined by two lateral conveyance assemblies (3) supported by support means (4), separated transversely by an empty middle space (5), and arranged parallel to the direction of conveyance (D) on the two longitudinal sides of the conveyance device (1), each lateral conveyance assembly (3) comprising:
- a lateral roller rail (6), having a middle plane (Q) and comprising a support beam (8) of U-shaped cross-section with a web plate (10), a distal raised wing (11), and a proximal raised wing (12), defining an open space (13), and a plurality of successive rollers (9) of which the transverse axes are supported by the wings (11 and 12) of the support beam (8), having a distal circular edge (14), a proximal circular edge (15), and between them a roll band (16) protruding from the longitudinal edges (11a and 12a) of the wings (11 and 12), the virtual conveyor belt (2) being tangential to the roll bands (16), and
- a lateral edge beam (7) having a middle plane and comprising an association part (17), rigidly associated with the support beam (8) of the roller rail (6) having a cross-section comprising a pseudo-U forming the association part (17) and having a web plate (19), a distal wing (20), a proximal wing (21), and at least one projection, distal (22) or proximal (23), pointing towards the middle plane (R) and adjoining the longitudinal edge of the wing (20, 21) of the association part (17), the lower surface of the association part (17) being complementary to the upper surface of the support beam (8), the projection (22, 23) from the association part (17) forming a stop for the free longitudinal edge (11a, 12a) of the wing (11, 12) of the support beam (8), **characterized by** a lateral edge beam (7) which comprises a distal lateral guard part, protruding from the distal longitudinal part of the association part (17), having an active longitudinal part distanced from the virtual conveyor belt (2) and thus able to interfere with the conveyed objects (B) in order to prevent them from falling from the conveyance device (1), formed by a longitudinal edge (26) pointing towards the middle plane (R) of a crosspiece (25) pointing towards the middle plane (R) of an inverted L of which the stem (24) extends the distal wing (20) of the association part (17) and laterally delimits the conveyance device (1), the longitudinal edge (26) being located near the right side of the distal circular edge (14) of the rollers (9) and aligned with the roll bands (16) of the rollers (9), so as to prevent the conveyed objects (B) from obstructing the conveyance device (1) and therefore to keep the conveyed objects (B) correctly aligned on the conveyance device (1), the lateral edge beam (7) constituting a lateral in-line guidance beam (7) for the conveyed objects (B).

2. Roller conveyance device (1) according to claim 1, wherein the longitudinal edge (26) of the crosspiece (25) pointing towards the middle plane (R) is located to the right of the roll bands (16) of the rollers (9), at a distance from the distal circular edges (14) that is less than half the axial length of the rollers (9) and more particularly is less than a quarter of the axial length of the rollers (9).

3. Roller conveyance device (1) according to any of claims 1 to 2, wherein the longitudinal edge (22a, 23a) of the distal (22) or proximal (23) protrusion from the lateral in-line guidance beam (7) pointing towards the middle plane is located at least substantially to the right of the lower surface of the corresponding raised wing, distal or proximal, of the support beam (8).

4. Roller conveyance device (1) according to any of claims 1 to 3, wherein the association part (17) of the lateral in-line guidance beam (7) comprises a distal protrusion (22) and a proximal protrusion (23).

5. Roller conveyance device (1) according to any of claims 1 to 4, wherein at least one distal (22) or proximal (23) protrusion from the lateral in-line guidance beam (7) comprises on its longitudinal edge pointing towards the middle plane, a return (27) pointing towards the lower web plate (19), of which the lower surface cooperates with the lower surface of the corresponding distal (11) or proximal (12) wing of the support beam (8) near its longitudinal edge (11a or 12a).

6. Roller conveyance device (1) according to any of claims 1 to 5, wherein the virtual conveyor belt (2) is confined on its two longitudinal sides to the right of the two longitudinal edges (26) of the two crosspieces (25) pointing towards the middle planes (R) of the two lateral in-line guidance beams (7).

7. Roller conveyance device (1) according to any of claims 1 to 6, wherein it also comprises at least one middle roller rail, supported by the support means (4), located between the two lateral conveyance assemblies (3) and placed parallel to the direction of conveyance (D).

8. Roller conveyance device (1) according to claim 7, wherein a middle roller rail has a structure that is analogous to a lateral roller rail (6).

9. Roller conveyance device (1) according to any of claims 1 to 8, wherein the support means (4) comprise at least two fixed support bars (28), respectively upstream and downstream, arranged transversely, positioned at the two respective upstream and downstream ends of the conveyance device (1), and at least four connecting parts forming jaws (29), each fixed to the end (30) of a support beam (8) of a roller rail (6) and to one of the support bars (28).

10. Roller conveyance device (1) according to any of claims 1 to 9, wherein the direction of conveyance (D) is arranged to have a downward slope, upstream to downstream, the conveyance device (1) operating by gravity.
